Europäisches Patentamt

European Patent Office

Office européen des brevets

(19)

(11) **EP 0 782 397 B1**

(12) **FASCICULE DE BREVET EUROPEEN**

(45) Date de publication et mention
de la délivrance du brevet:
**21.03.2001 Bulletin 2001/12**

(21) Numéro de dépôt: **95932039.1**

(22) Date de dépôt: **21.09.1995**

(51) Int Cl.⁷: **A23L 1/10**

(86) Numéro de dépôt international:
**PCT/FR95/01217**

(87) Numéro de publication internationale:
**WO 96/08978 (28.03.1996 Gazette 1996/14)**

(54) **PRODUITS ALIMENTAIRES MAJORITAIREMENT A BASE DE PLANTES A FARINE NON PANIFIABLE ET PROCEDE D'OBTENTION**

**NAHRUNGSMITTEL, HAUPTSAECHLICH AUF DER GRUNDLAGE VON ZUR BROTHERSTELLUNG UNGEEIGNETES MEHLLIEFERNDEN PFLANZEN UND VERFAHREN ZU SEINER HERSTELLUNG**

**FOOD PRODUCTS BASED ESSENTIALLY ON NON-BREAD FLOUR PLANTS AND METHOD FOR OBTAINING SUCH PRODUCTS**

(84) Etats contractants désignés:
**AT BE CH DE DK ES FR GB GR IE IT LI LU MC NL PT SE**

(30) Priorité: **22.09.1994 FR 9411336**

(43) Date de publication de la demande:
**09.07.1997 Bulletin 1997/28**

(73) Titulaire: **INSTITUT NATIONAL DE LA RECHERCHE AGRONOMIQUE**
**75338 Paris Cédex 07 (FR)**

(72) Inventeurs:
• **KOBREHEL, Karoly**
  **F-34070 Montpellier (FR)**
• **NIMBONA, Côme**
  **Burundi (BI)**

(74) Mandataire: **Phélip, Bruno et al**
**c/o Cabinet Harlé & Phélip**
**7, rue de Madrid**
**75008 Paris (FR)**

(56) Documents cités:
**EP-A- 0 450 310          US-A- 4 435 435**

• **PATENT ABSTRACTS OF JAPAN vol. 5, no. 71 (C-054) 13 Mai 1981 & JP 56 021 566 A (ALPHA SHOKUHIN KK ET AL.) 28 Février 1981**
• **PATENT ABSTRACTS OF JAPAN vol. 17, no. 278 (C-1065) 28 Mai 1993 & JP 05 015 309 A (EZAKI GLICO CO. LTD.) 26 Janvier 1993**
• **PATENT ABSTRACTS OF JAPAN vol. 18, no. 204 (C-1189) 11 Avril 1994 & JP 06 007 071 A (KOSHIRO TAKEDA) 18 Janvier 1994**

**Description**

Produits alimentaires majoritairement à base de plantes à farine non panifiable et procédé d'obtention

La présente invention a pour objet des produits alimentaires majoritairement à base de plantes à farine non panifiable.

Elle est d'autre part relative à un procédé d'obtention de ces produits.

Les pâtes alimentaires sont traditionnellement préparées à partir de farine de blé dur ( Triticum durum ). Dans certains pays on ajoute néanmoins de la farine de blé tendre ( Triticum aestivum). Cependant, la farine de blé tendre ne peut être utilisée seule, car elle ne permet pas d'obtenir après cuisson un produit présentant une cohésion. Cette absence de cohésion se retrouve avec toutes les farines d'autres céréales non-panifiables, telles que le maïs, le sorgho ou le riz mais aussi avec des farines issues de graines de plantes autres que des céréales, telles que le soja ou le manioc.

A titre d'exemple, on peut citer les pâtes, ou d'autres produits présentant une cohésion, obtenus à partir de farine de riz.

Ainsi, le brevet JP-60 07 071 est relatif, d'après son abrégé, à un procédé comprenant l'hydratation de la farine de riz, sa pulvérisation, son pétrissage avec du gluten, suivis d'une fermentation et d'une cuisson au four.

Le brevet JP-56 021 566 divulgue, d'après son abrégé, un procédé dans lequel la farine de riz est mélangée à de l'amidon, avec un liant et de l'eau, à raison de 25 à 35% en poids d'eau, puis pétrie, soumise à deux cuissons puis séchée.

Selon ces deux documents, il y a donc obligatoirement mélange de la farine de riz avec de l'amidon ou un autre liant, et cuisson des produits.

Le brevet JP-50 015 309, d'après son abrégé succinct, concernerait un procédé équivalent dans lequel la farine de riz finement pulvérisée est hydratée, à un taux non indiqué, puis cuite par la vapeur avant d'être pétrie et séchée. Finalement, une seconde étape de cuisson par rotissage dans un four à micro-ondes permet d'obtenir un produit présentant une cohésion.

Ces trois exemples de procédé concernant le riz montrent donc bien que l'ajout d'un liant est nécessaire et qu'en tout état de cause au moins une étape de cuisson est indispensable.

Le blé dur, panifiable, ne représente, avec une production mondiale de l'ordre de 30 millions de tonnes, qu'un faible pourcentage de la production mondiale de céréales qui est supérieure à 550 millions de tonnes. De plus, il n'est cultivable que dans un nombre restreint de régions.

Le manque de cohésion des produits obtenus à partir de farines de céréales non panifiables ou d'autres plantes fournissant des farines nutritives, est un problème majeur pour l'alimentation humaine, car il réduit considérablement les possibilités de fabrication de produits faciles à conserver issus de ces plantes ou de ces farines.

Des solutions de différentes natures ont néanmoins été trouvées dans certains pays.

Ainsi, en Europe Centrale, des pâtes sont obtenues en mélangeant du blé tendre avec des additifs tels que des oeufs.

Des pâtes peuvent aussi être obtenues à partir de céréales non panifiables par des procédés de fabrication faisant intervenir la gélatinisation ou la fermentation préalable de l'amidon. Cependant, ces produits sont marginaux et ont des qualités organoleptiques très différentes de celles obtenues à partir de blé dur. Leur utilisation est liée à des habitudes culinaires particulières.

Comme l'indique Faure en 1992 dans une revue des produits de type pâte comprenant des céréales non panifiables, il n'existe pas de produits majoritairement à base de céréales non panifiables et pouvant être cuits. ( Sorghum and maize pasta and extruded produits, p. 75-82 in " Utilization of sorghum and millets, Gomez et al. ed. Patancheru, India, International Crops Research Institute for the Semi-Arid Tropics).

Le demandeur s'est donc attaché à mettre au point des produits faciles à fabriquer, obtenus à partir de céréales non panifiables, pouvant être stockés sur de longues durées et pouvant être cuits et consommés de la même manière que les pâtes de blé dur. Il a montré que, contrairement à ce qui est habituellement admis, on peut obtenir des produits présentant une cohésion uniquement à partir de céréales non panifiables, et ce même sans cuisson .

La présente invention a donc pour objet un produit alimentaire majoritairement à base de plantes à farine non panifiable, ou farine sans gluten, et présentant une cohésion. On entend par cohésion la capacité d'un produit à ne former qu'un seul bloc et à conserver sa forme tout en absorbant de l'eau, lors de la cuisson ou d'une surcuisson.

Avantageusement un tel produit est sous forme cuite.

Le terme gluten doit être compris dans le sens utilisé pour le gluten obtenu à partir de farine de blé.(Voir: Mauzé C. Richard M. et Scotti G. "Guide pratique Contrôle de la qualité des blés" 1972, édité par ITCF Paris; Dacosta Y.". Le Gluten de blé et ses applications" 1986, édité par APRIA Paris).

On entend par plantes à farine non panifiable les plantes qui, à la date de la présente invention, ne pouvaient aboutir, contrairement aux céréales panifiables telles que le blé, à des produits présentant une cohésion.

De telles plantes peuvent être les céréales non panifiables, telles que le sorgho, le maïs ou le riz, ou des plantes autres que des céréales telles que le soja, le manioc, l'igname, la patate douce ou la pomme de terre.

Elles peuvent aussi être le teff, le sarrasin et le poids chiche.

De manière générale toutes les farines obtenues à partir de céréales ou d'autres sources, à l'exception de la farine de blé, sont considérées comme des farines non panifiables, ou farines sans gluten. Il est possible de fabriquer des produits de type pain avec les farines de seigle et d'orge; néanmoins ils présentent des qualités organoleptiques inférieures aux produits obtenus à partir de blé, en particulier une moins bonne viscoélasticité.

Le produit selon l'invention contient au minimum 80% en poids de farine de plante non panifiable et encore plus préférentiellement au minimum 90%.

Avantageusement, un tel produit comprend un pourcentage proche de 100 % en céréales non panifiables.

Un tel produit peut être avantageusement caractérisé en ce qu'il présente:

- une capacité à absorber l'eau supérieure à 150% et avantageusement supérieure à 200%:
- une résistance proche de 100 % à une surcuisson de cinq minutes après une cuisson conventionnelle l'ayant amené à un état cuit.

Il peut en outre posséder une viscoélasticité, c'est-à-dire qu'après compression le produit recouvre en partie son épaisseur d'avant la compression.

Les tests permettant de mesurer les caractéristiques de ces produits sont décrits dans les exemples de mise en oeuvre de l'invention qui suivent.

De tels produits peuvent aussi comprendre des composants, autres que ceux mentionnés ci-dessus, sous forme de poudre, tels que, dans le cadre d'aliments pour animaux, de la poudre d'os, du sang séché, du lait en poudre ou des sous produits de l'abattage.

La présente invention a d'autre part pour objet un procédé d'obtention d'un produit tel que décrit ci-dessus comprenant les étapes suivantes :

- hydratation de farine ou de semoule d'une plante à farine non panifiable jusqu'à l'obtention d'un taux d'hydratation permettant l'obtention d'une pâte,
- compression de la pâte, et
- séchage.

Les produits peuvent alors être cuits, de manière similaire aux pâtes obtenues à partir de blé dur.

Préférentiellement l'hydratation est effectuée par pétrissage. Elle dépend de chaque produit. Elle est d'au moins 55% du poids sec, et encore préférentiellement de 60%.

L'hydratation de la farine varie en fonction du type de plante dont elle est issue. Ainsi, le taux d'hydratation doit être compris entre 60 et 70% pour le soja, entre 65 et 95% pour le riz, entre 85 et 95% pour le maïs ou le sorgho, entre 95% et 105% pour un gluten de maïs et entre 100 et 110% pour une farine de manioc.

L'hydratation de la farine nécessaire à la mise en oeuvre du procédé selon l'invention doit être déterminée pour chaque farine ou mélange de farines. Elle peut être déterminée par des essais préalables effectués dans un farinographe. Une faible quantité de farine est graduellement hydratée dans un micropétrin dont les bras pétrissent la farine à tester. La mesure du couple du micropétrin permet de déterminer l'hydratation optimale de la farine pour former le produit objet de la présente invention.

Le couple optimal correspond à environ 500 unités Brabender pour le blé et à 400 unités Brabender pour le riz.

Les conditions de détermination de l'hydratation sont décrites dans "Mauzé et al.: Guide pratique contrôle de la qualité des blés, 1972, éd. ITCF, Paris.

De manière avantageuse, la compression de la pâte est effectuée à une pression minimale de $5,88.10^6$ Pa (60 kg/cm$^2$) et préférentiellement d'au minimum $9,8.10.^6$ Pa (100 kg/cm$^2$). Le temps de pression est de quelques secondes.

Avantageusement, le séchage est effectué à une température inférieure à 45°C et préférentiellement proche d'environ 30°C.

Outre les étapes indiquées ci-dessus, le procédé peut aussi comprendre une étape dans laquelle la farine ou la semoule hydratée est pétrie et/ou une étape dans laquelle la pâte est laminée avant d'être comprimée.

L'étape de compression est effectuée préférentiellement à l'aide d'une presse ou d'une extrudeuse.

Le laminage peut quant à lui être mis en oeuvre à l'aide d'un dispositif constitué de rouleaux tournant dans des directions opposées, entre lesquels la pâte est laminée.

L'homme du métier pourra se référer pour la mise en oeuvre de la présente invention et en particulier du procédé au manuel général suivant : Mauzé et al: Guide pratique - Contrôle de la qualité des blés, 1972, ed. ITCF, Paris.

Le procédé objet de la présente invention permet d'obtenir des produits présentant une cohésion après cuisson, sans exercer un quelconque traitement dénaturant. Il ne modifie donc pas de manière notable la nature biochimique des différents constituants des farines et en particulier n'entraîne pas de dénaturation thermique des protéines ou de l'amidon. Cette absence de dénaturation permet de conserver la qualité des matières premières mises en oeuvre et donc d'obtenir une haute qualité nutritionnelle des produits objets de la présente invention.

On notera que la présente invention va à l'encontre des préjugés de l'homme du métier qui ne pouvait concevoir que des plantes, et en particulier des céréales, définies comme non panifiables permettent d'obtenir des produits alimentaires présentant une cohésion après cuisson.

En outre les produits selon l'invention peuvent être panifiables ou conduire à des produits panifiables.

Le procédé objet de la présente invention permet la production de produits à partir de céréales considérées comme non panifiables. Ces céréales se trouvent en particulier dans les pays en voie de développement dans lesquels le blé ne peut être cultivé.

La présente invention résoud donc un problème important pour ces pays et présente de ce fait un progrès technique essentiel.

Un autre progrès technique important, engendré par l'invention, réside dans l'utilisation des produits objets de la présente invention pour la santé humaine. En effet, il est connu que certaines personnes présentent une intolérance au gluten de blé, appelée maladie coeliaque. La consommation des produits selon l'invention par ces personnes permet de pallier cet inconvénient des pâtes classiques contenant du gluten de blé.

La présente invention est illustrée sans pour autant être limitée par la description et les exemples ci-après en référence aux dessins annexés sur lesquels:

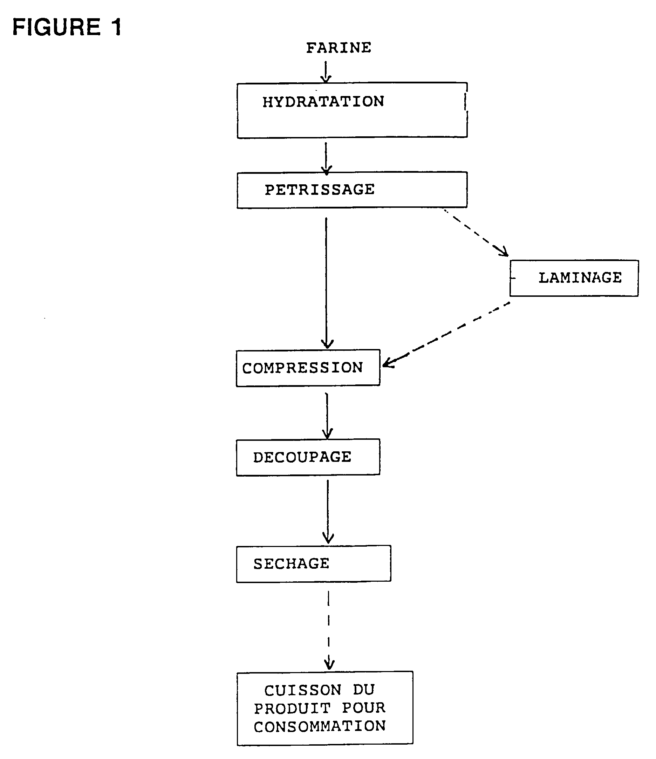

- la figure 1 représente schématiquement le procédé selon l'invention.
- la figure 2 illustre le gonflement ( en ordonnée) de produits selon l'invention obtenus à partir de maïs, de sorgho et de riz, en fonction du temps de cuisson (en abscisse). Les flèches indiquent le temps de cuisson au bout duquel l'amidon est complètement gélatinisé.
- la figure 3 montre les gonflements des produits cuits obtenus à partir de blé dur ( DW), de blé tendre (BW), de riz (R), de sorgho (S) et de maïs (C).
- la figure 4 illustre les pertes à la cuisson ( en ordonnée) obtenues pour des produits obtenus à partir de riz, de sorgho et de maïs en fonction du temps de cuisson (en abscisse).
- les figures 5A à 5E représentent l'évolution de la viscoélasticité. L'épaisseur ( en ordonnée) est mesurée en fonction du temps ( en abscisse) pour des produits obtenus respectivement à partir de blé dur, de blé tendre, de maïs, de sorgho et de riz.
- les figures 6, 7 et 8 sont des diagrammes illustrant respectivement la compressibilité, la recouvrance et l'index de viscoélasticité des produits objets de la figure 3. Les abréviations sont identiques à celles utilisées dans la figure 3.

Les figures 9, 10, 11 et 12 sont des photographies en microscopie électronique de produits selon l'invention obtenus respectivement à partir de blé dur, de maïs, de riz et de sorgho. Les produits des figures 9A, 10A, 11A et 12A ont été obtenus par le procédé selon l'invention comprenant un séchage à 30°C avec une humidité relative de 78 à 94 % tandis que les produits des figures 9B, 10B, 11B et 12B ont été séchés à 25°C avec une humidité relative ambiante.

EXEMPLE 1:

Fabrication de produits selon l'invention à partir de farines de maïs, de sorgho et de riz.

1. Taille des particules de la farine.

La taille moyenne des particules des farines de maïs, de sorgho et de riz, utilisées pour la préparation des produits de type pâtes selon l'invention est d'environ 160µm.

Dans le cas du maïs, des échantillons ayant une taille de particule supérieure, de l'ordre de 200 µm ont été également préparés. Les produits obtenus avec ces échantillons présentent une capacité d'absorption d'eau supérieure durant la cuisson mais l'aspect des produits n'est pas homogène, même après cuisson.

2. Préparation de produits de type pâtes selon l'invention.

2.1 Hydratation

Afin d'obtenir des produits de qualité, la quantité d'eau à ajouter a été déterminée de manière optimale pour chaque type de matériau de base ( farine ou semoule ).

Pour les farines, les hydratations suivantes, calculées sur une base sèche, ont été utilisées:

- maïs et sorgho : 89,5 %
- riz : entre 70 et 89,5 %
- soja : 64,8 %
- manioc : 105 %
- gluten de maïs : 100 %.

L'influence de l'hydratation sur la qualité des produits finaux dépend de l'origine de la farine utilisée.

Dans la plupart des cas, un écart de plus ou moins 3% par rapport aux valeurs indiquées ci-dessus est acceptable. Dans le cas du maïs et du sorgho, quand l'écart est de plus ou moins 9,5 % par rapport à l'optimal déterminé, la qualité du produit final n'est plus acceptable.

### 2.2. Pétrissage

Pour chaque type d'échantillon de farine, la quantité d'eau requise a été ajoutée et le mélange a été effectué pendant dix minutes environ, c'est-à-dire le temps nécessaire pour obtenir un produit de type pâte.

Afin d'effectuer ce mélange, on a utilisé un micro-farinographe Brabender, un mixographe ou un pétrin Mahot.

Avec les deux premiers appareils, on ne peut pétrir que de 10 à 40 g de farine, tandis que le second permet de pétrir un kilogramme.

Les expérimentations ont été effectuées à des températures variant entre la température ambiante ( environ 20°C) et 37°C. Aucune influence du type d'appareil utilisé aux températures de pétrissage n'a pu être mise en évidence.

### 2.3. Laminage.

Afin d'obtenir le produit sous la forme d'une feuille, la pâte formée est passée deux fois entre des rouleaux ayant un écartement de 2,5 mm et tournant dans des directions opposées.

Cette étape peut néanmoins être omise sans pour

Cette étape peut néanmoins être omise sans pour autant diminuer la qualité des produits finaux.

### 2.4. Compression

Les pâtes laminées sont introduites dans une presse où une pression de $5,88.10^6$ à $19,6.10^6$ Pa (60 à 200 kg/cm$^2$) est appliquée.

La qualité des produits finaux est substantiellement comparable quand les pressions appliquées sont comprises entre $5,88.10^6$ et $19,6.10^6$ Pa 60 et 200 kg/cm$^2$. En utilisant des pressions inférieures à $5,88.10^6$ Pa 60 kg/cm$^2$, la qualité des produits finaux a tendance à diminuer.

### 2.5. Découpage

La pâte compressée est découpée sous la forme de disques ayant des diamètres de 35 mm ou 14 mm et des épaisseurs d'environ 2mm.

La forme des produits peut être différente sans pour autant changer leur comportement.

### 2.6. Séchage.

Les produits découpés frais sont mis sur un plateau de type tamis, en acier inoxydable, puis sont exposés dans le séchoir à une température de 30°C et une humidité relative comprise entre 90 et 94%. Après 14 heures, l'humidité relative dans le séchoir est d'environ 80% et l'humidité du produit est d'environ 16%, calculée sur une base sèche.

A ce moment, les produits sont ôtés du séchoir et laissés à l'air libre à la température ambiante.

Après six heures à la température ambiante, l'humidité des produits décroît et atteint 12%.

Les produits séchés sont stockés à température ambiante sans prendre de précaution particulière.

A des températures de séchage supérieures à 40°C, la qualité culinaire des produits décroît. De manière similaire, le séchage des produits à des humidités relativement basses, même à faible température, a un effet négatif sur les qualités organoleptiques et plus particulièrement sur la qualité culinaire des produits.

Il doit être noté cependant que, quand les produits étaient séchés à une température élevée (- 70°C), l'humidité relative était de 83 %, en raison des caractéristiques techniques du séchoir. Le séchage pourrait être effectué à des températures supérieures si l'humidité relative était maintenue à une valeur suffisamment élevée.

3. Caractérisation des produits obtenus.

La caractérisation des échantillons est effectuée sur des produits de type pâte fabriqués à partir de différents matériaux de base et préparés dans des conditions similaires.

3.1. Caractérisation de la qualité culinaire des produits.

3.1.1. Absorption d'eau.

L'absorption d'eau est mesurée en plongeant les produits dans de l'eau bouillante. Après cuisson les produits sont retirés et mis dans l'eau à la température ambiante. Ils sont refroidis, ensuite essuyés et pesés.

L'absorption d'eau est exprimée en pourcentage de l'augmentation de poids des produits durant la cuisson, calculée sur la base de la matière sèche.

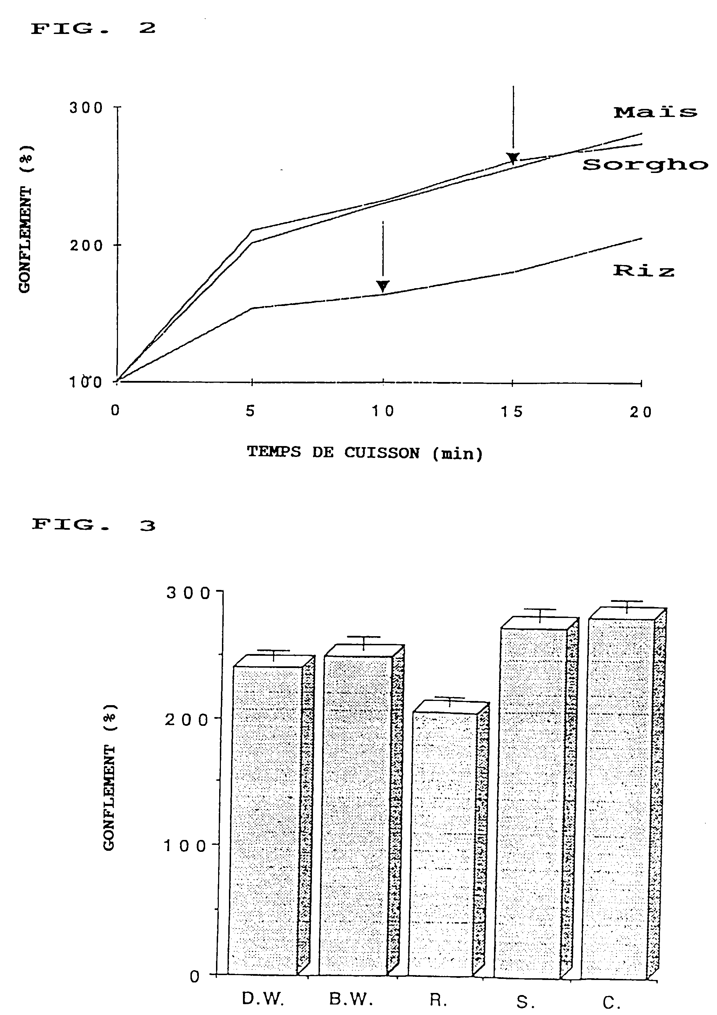

Les résultats représentés sur la figure 2 montrent que l'absorption d'eau des produits provenant de chaque céréale sans gluten, c'est-à-dire de céréales non panifiables ( maïs, sorgho et riz ), augmente progressivement en fonction du temps de cuisson. Le tableau 1 illustre aussi cette propriété par des résultats complémentaires.

La vitesse de gonflement des produits diminue mais le gonflement continue néanmoins après une complète gélatinisation de l'amidon.

Comme le montre la figure 2, l'absorption d'eau des produits atteint des valeurs supérieures à 200 % lors de la gélatinisation complète de l'amidon, c'est-à-dire à un moment où les produits peuvent être considérés comme étant totalement cuits.

On notera néanmoins que l'absorption d'eau dépend aussi de la forme des produits. Dans le cas de disques ayant un faible diamètre, le temps de cuisson est inférieur. Dans ce cas, lorsque la gélatinisation de l'amidon est totale, l'absorption d'eau est considérablement plus importante que dans les produits ayant un diamètre important. Pour cette raison, les résultats concernant l'absorption d'eau ne peuvent être considérés comme absolus et seuls les résultats obtenus avec des produits ayant des tailles similaires peuvent être comparés.

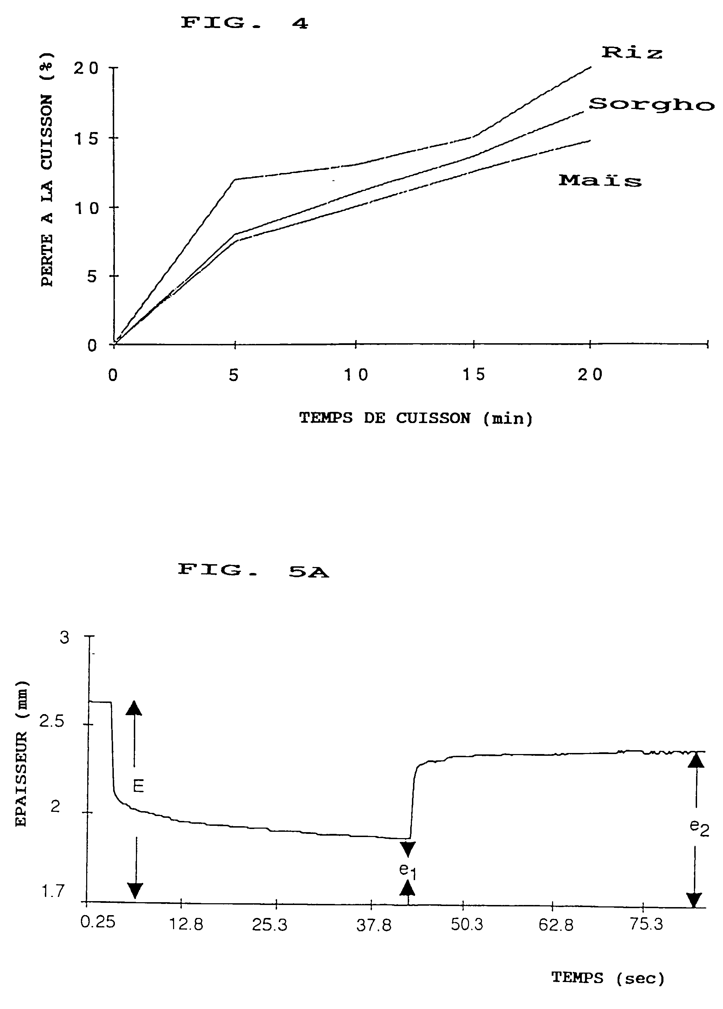

Les résultats présentés sur la figure 3 et dans le tableau 1 comparent les résultats obtenus avec cinq produits céréaliers différents. Ils montrent que l'absorption d'eau des produits obtenus à partir de céréales non panifiables est comparable à l'absorption d'eau de produits obtenus à partir de blé dur. Les valeurs sont similaires pour le maïs et le sorgho. Elles peuvent être supérieures à celles obtenues avec le blé.

Des résultats similaires sont obtenus pour des produits fabriqués à partir de blé dur et de blé tendre.

3.1.2. Résistance à la surcuisson

Le temps de cuisson est défini comme le temps nécessaire pour obtenir une gélatinisation complète de l'amidon de produit plongé dans de l'eau bouillante. Cette détermination est effectuée par une observation visuelle . A cet effet, les produits cuits sont coupés et compressés à la main entre deux pièces de verre synthétique (Plexiglas). Lorsque le produit est cuit, la ligne de couleur blanche, due à l'amidon non-gélatinisé, disparait.

Les produits obtenus à partir de différentes céréales ou à partir d'autres origines sont cuits dans les conditions habituelles de cuisson de pâtes de blé dur, comme décrit ci-dessus.

La cuisson a été maintenue pendant cinq minutes après la complète gélatinisation de l'amidon. ( T + 5). Les produits sont considérés comme résistant à une surcuisson quand, après T + 5, ils conservent leur forme initiale et sont d'un aspect homogène typique de produits cuits et gonflés.

Au contraire, des produits préparés de manière impropre se désintègrent durant la cuisson ou durant la surcuisson.

3.1.3. Propriétés viscoélastiques.

Les propriétés viscoélastiques ont été déterminées en utilisant un viscoélastographe, tel qu'utilisé pour déterminer les propriétés viscoélastiques de pâtes de blé dur.

Selon cette méthode, on applique un poids de 750 g au produit cuit présentant une forme régulière. Les produits cuits sont coupés afin d'avoir la taille de petits disques ayant un diamètre de 10 mm et une épaisseur initiale E.

Après une compression de 40 secondes, les produits compressés ont une épaisseur e1, et, de 20 à 40 secondes après que le poids ait été enlevé, une épaisseur e2.

Les formules utilisées pour calculer la compressibilité, la recouvrance élastique et l'index de viscoélasticité, sur la base des valeurs E, e1 et e2 sont les suivantes :

$$\text{Compressibilité (C)} = \frac{E - e_1}{E}$$

$$\text{Recouvrance élastique ( ER)} = \frac{e_2 - e_1}{E - e_1}$$

$$\text{Index de viscoélasticité (VI)} = \frac{e_2 - e_1}{(E - e_1)^2} \, E.10$$

Les courbes obtenues pour le blé dur, le blé tendre, le maïs, le sorgho et le riz sont respectivement représentées sur les figures 5A, 5B, 5C, 5D et 5E.

Dans ces expériences, les produits à base de blé dur ont été préparés dans les mêmes conditions que les produits à base de céréales sans gluten (céréales non panifiables), afin de comparer leurs qualités dans des conditions équivalentes. On notera cependant que l'hydratation de la semoule de blé dur a été effectuée à une valeur de 49 % sur la base de la matière sèche, correspondant à l'hydratation utilisée habituellement pour préparer des pâtes de blé dur.

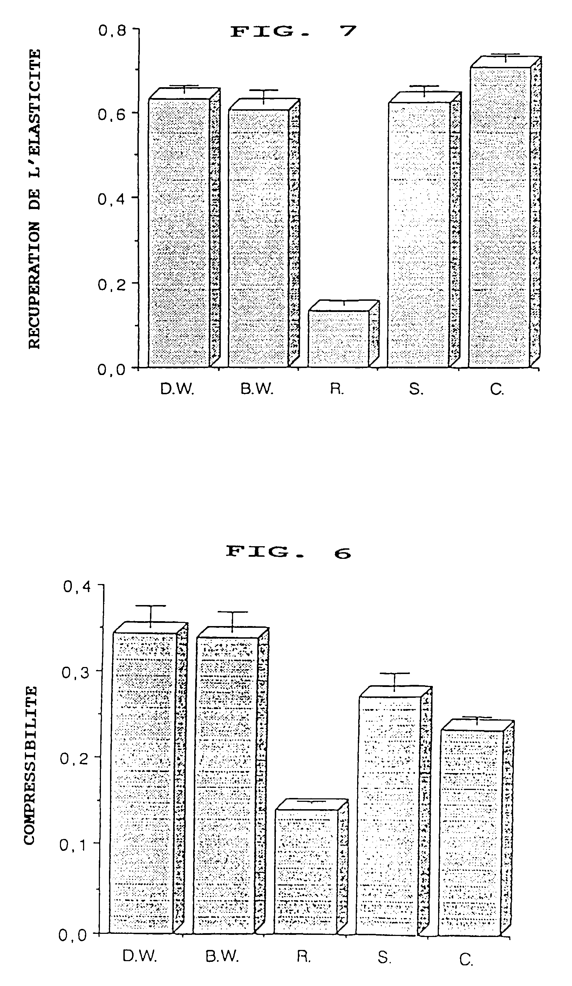

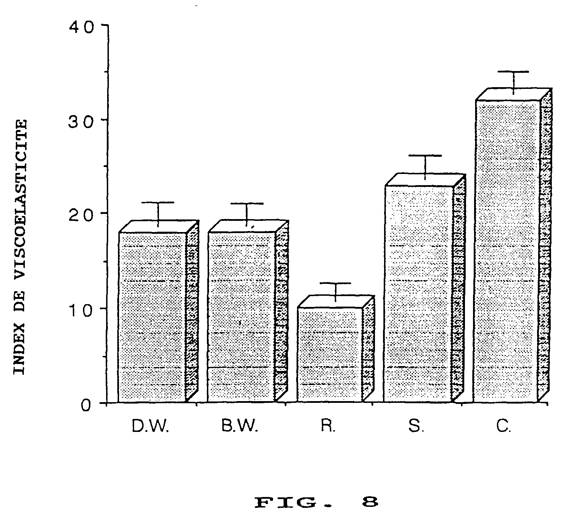

La compressibilité des différents produits obtenus est représentée sur la figure 6 tandis que la recouvrance élastique est illustrée sur la figure 7 et l'index de viscoélasticité des produits cuits sur la figure 8.

De manière générale, la qualité des produits obtenus à base de riz est inférieure à la qualité des produits provenant des autres céréales.

Les produits obtenus à partir de blé dur et de blé tendre présentent des caractéristiques similaires

La qualité des produits obtenus à partir de maïs et de sorgho est comparable ou même supérieure à celle de produits obtenus à partir de blé. Le paramètre le plus intéressant est la recouvrance élastique des produits cuits. Les meilleures valeurs sont obtenues pour le maïs et le sorgho.

### 3.1.4. Perte à la cuisson.

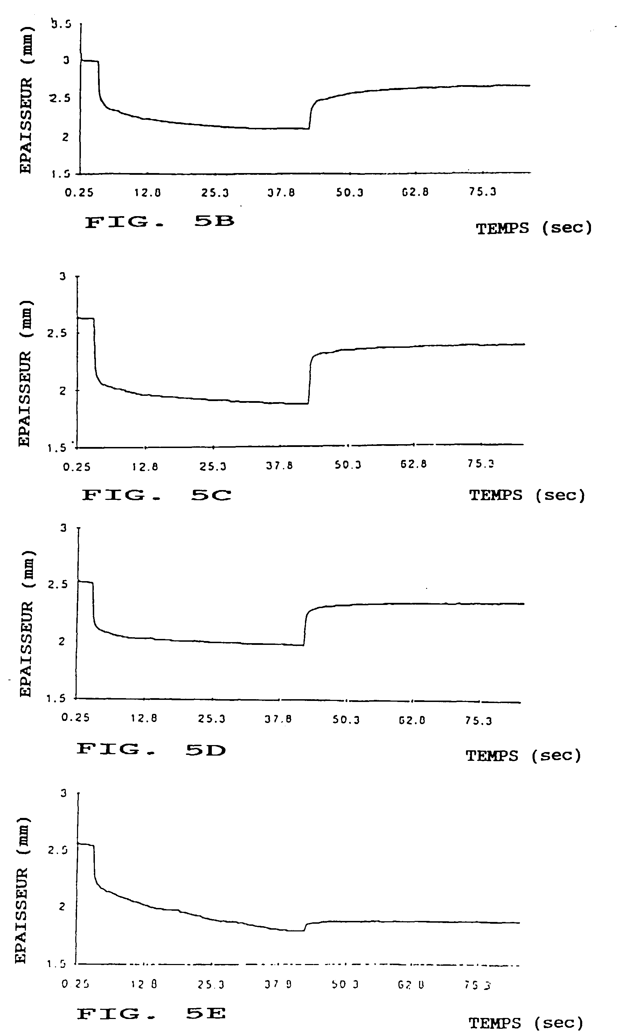

L'évolution des pertes à la cuisson en fonction du temps de cuisson des produits obtenus à partir de maïs, de sorgho et de riz est illustrée sur la figure 4 et sur le tableau 1.

Le temps de cuisson a été déterminé comme étant de 13 minutes pour les produits obtenus à partir de maïs et de sorgho et d'environ 10 minutes pour les produits obtenus à partir de riz.

Ces résultats montrent qu'au temps de cuisson T, quand les produits sont cuits, les pertes engendrées par la cuisson des produits obtenus à partir de maïs et de sorgho sont légèrement inférieures à 10 % tandis que, pour les produits obtenus à partir de riz, les pertes à la cuisson sont d'environ 12 %. Les produits obtenus à partir de blé dur et de blé tendre dans des conditions similaires présentent un temps de cuisson d'environ 13 minutes.

Comme le montre le tableau 1, les pertes à la cuisson de produits obtenus à partir de blé dur sont similaires à celles des autres produits, bien que les pertes à la cuisson de produits obtenus à partir de blé tendre soient légèrement inférieures. Les pertes à la cuisson de pâtes de blé dur traditionnelles, telles que les spaghettis, sont légèrement inférieures à 15%.

Ceci montre que le procédé objet de la présente invention n'a pas d'effet négatif sur les paramètres caractérisant la qualité des produits de type pâte.

### 3.2. Coloration des produits

La coloration des différents produits de type pâte dépend en premier lieu des caractéristiques du matériel de base, plus que de la céréale utilisée. Ainsi, les produits obtenus à partir de maïs blanc et de maïs jaune ont d'une part de bonnes qualités culinaires et d'autre part conservent respectivement leur coloration caractéristique claire ou jaune, même après cuisson. Les produits, aussi bien avant cuisson qu'après cuisson, fabriqués à partir de farine de riz ont une coloration similaire aux produits obtenus à partir de maïs blanc.

Les produits obtenus à partir de blé tendre ont une tendance à prendre une coloration sombre.

Les produits séchés obtenus à partir de sorgho peuvent, en fonction du cultivar utilisé, présenter une couleur sombre marron. Cette coloration marron diminue au cours de la cuisson.

Si la couleur du produit n'est pas celle souhaitée, par exemple dans le cas d'une coloration marron importante, l'amélioration peut être obtenue en baissant le pH de l'eau utilisée pour l'hydratation jusqu'à une valeur comprise entre 4 et 5, par exemple en ajoutant du vinaigre.

L'amélioration de la couleur des produits cuits peut être aussi obtenue de manière similaire en acidifiant faiblement l'eau de cuisson par exemple en ajoutant quelques gouttes de vinaigre à cette eau.

EXEMPLE 2:

Fabrication à partir de farines de teff, de sarrasin, de pois chiche, de sofa, d'igname, de patate douce et de pomme de terre.

1) Matières premières testées:

- céréales ou assimilé aux céréales : teff et sarrasin
- légumineuses: pois chiche, soja
- tubercules ou racines: igname, patate douce, pomme de terre.

2) Préparation des échantillons , et des produits.

Pour le teff, le sarrasin et le pois chiche, on a utilisé des farines du commerce.

Tubercules ou racines: les produits frais sont lavés, épluchés, découpés en petits morceaux puis séchés à l'étuve à 30-35°c. Les produits séchés (contenant environ 8% d'eau) sont broyés avec un Cyclotec 1093 Sample Mill. La granulométrie de la farine obtenue est d'environ 160 µm.

L'hydratation nécessaire pour la fabrication du produit a été déterminée au microfarinographe Brabender (obtention d'une pâte après le pétrissage), comme dans l'exemple 1 pour les céréales sans gluten.

Le procédé de fabrication des produits est le même que celui décrit dans l'exemple 1. Les farines sont hydratées par pétrissage puis les pâtes ainsi obtenues sont compressées (environ $9,8.10^6$ Pa (100 kg/cm$^2$) et séchées dans les conditions précédemment décrites.

On a également réalisé des produits à partir de mélanges de farines.

3) Résultats obtenus.

Les résultats de la caractérisation des produits sont présentés dans les tableaux 2, 3 et 4.

Les produits fabriqués à partir de matières premières différentes de celles de l'exemple 1 ont une bonne qualité culinaire.( voir tableaux).

Deux exceptions sont cependant à noter: la pomme de terre et le manioc. Cependant la farine de manioc utilisée est une farine de commerce.

Par contre, les produits préparés à partir de la farine d'igname dans les conditions décrites plus haut, ont une bonne tenue à la cuisson (tableaux 2 et 3).

L'addition de 10% de farine de soja à la farine de pomme de terre a rendu possible l'obtention d'un produit présentant une cohésion mais de moins bonne qualité qu'avec le mélange manioc 90% (farine du commerce) soja 10%.

Dans les mélanges, le soja peut être remplacé par le pois chiche. Cependant, pour obtenir un produit de bonne qualité, on doit rajouter 20% de farine de pois chiche à la farine de manioc ou de pomme de terre. Comme le montre le tableau 2 les teneurs protéiques du manioc et de la pomme de terre sont très faibles. L'addition d'une farine de légumineuse augmente simultanément la teneur protéique et la valeur nutritive des produits.

Dans le cas de l'igname et de la patate douce qui, comme la pomme de terre et le manioc, ne contiennent que très peu de protéines, l'addition de farine d'une légumineuse augmente la teneur protéique du produit, ainsi que sa valeur nutritive, mais l'addition d'autres farines n'est pas nécessaire pour l'obtention de nouveaux produits ayant une qualité culinaire satisfaisante.

A partir des farines amylacées ( pomme de terre, manioc) des produits selon l'invention ont été obtenus également sans ajout de farine de légumineuse en utilisant des mélanges 50%/50% de ces deux amylacées.

En ce qui concerne la mesure de viscoélasticité des produits, le tableau 4 montre que, suivant la charge utilisée, la discrimination entre les produits varie. Si l'utilisation d'une charge de 750g est recommandée pour les variétés de blé dur, les produits selon l'invention à base de farine contenant très peu de protéines, sont mieux différenciés en utilisant une charge de 500g. La plupart des produits obtenus ont une bonne viscoélasticité. Les produits contenant de la pomme de terre ont globalement une moins bonne viscoélasticité.

Etudes en microscopie électronique sur les produits à base de céréales non panifiables.

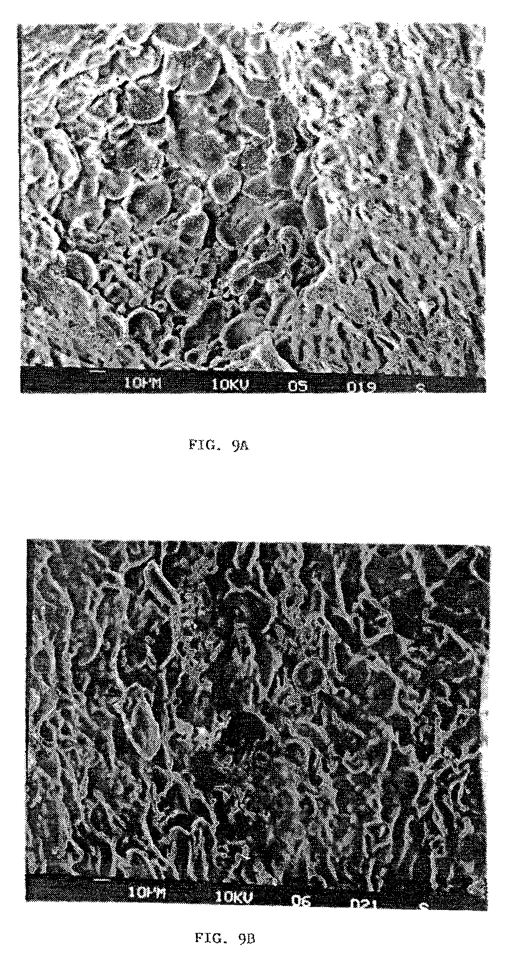

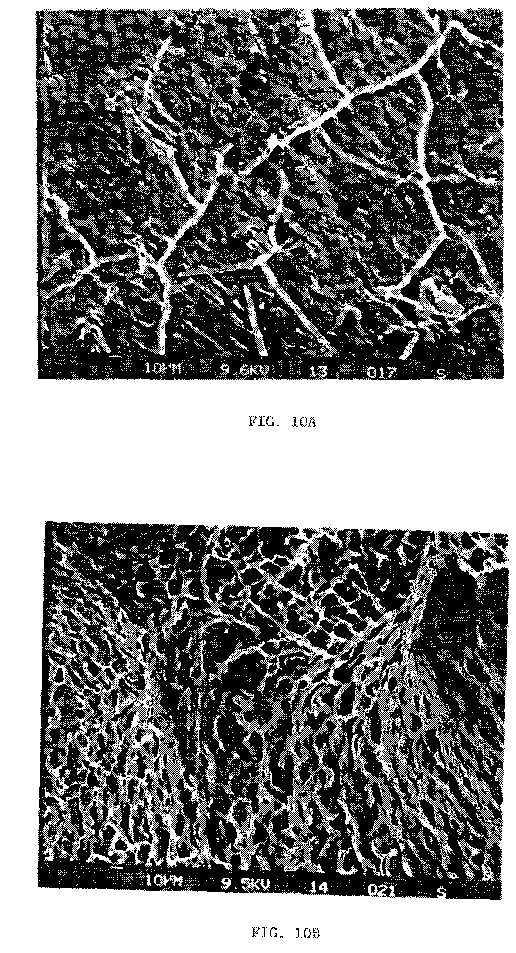

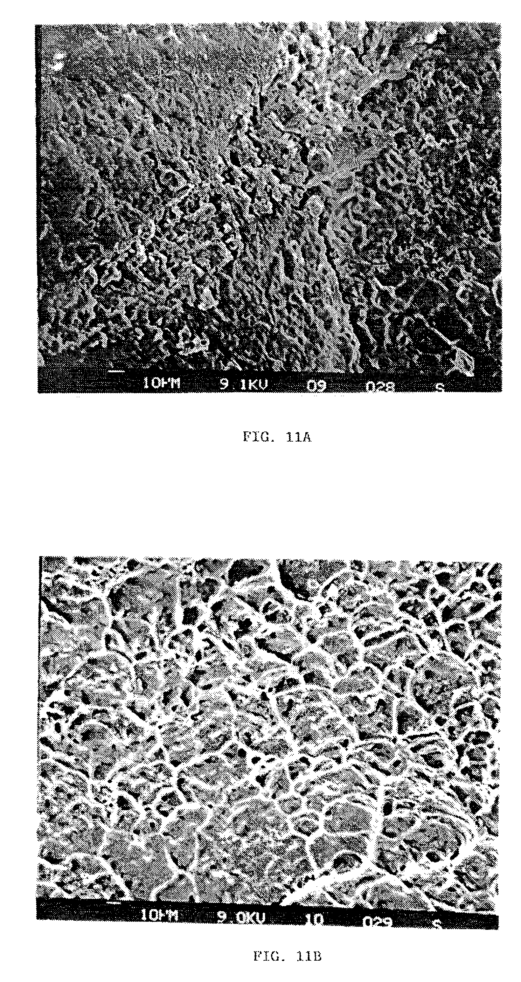

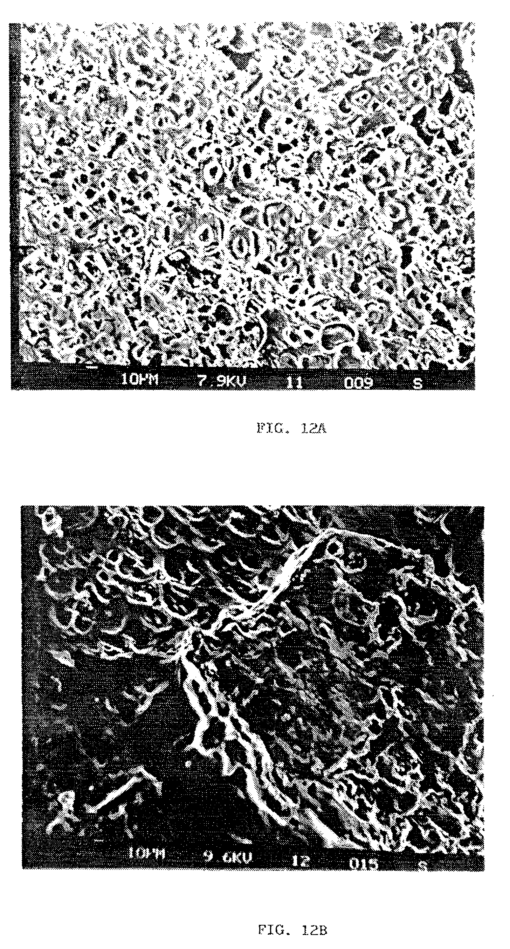

Les analyses ont été réalisées sur produits cuits à base de blé dur ( figures 9A et 9B), de maïs (figures 10A et 10B), de riz ( figures 11A et 11B) et de sorgho (figures 12A et 12B). Les produits des figures 9A, 10A, 11A et 12A ont été séchés à 30°C, avec une humidité relative de 78 à 94% tandis que ceux des figures 9B, 10B, 11B et 12B ont été séchés à 25°C avec une humidité relative ambiante. Les résultats montrent que l'ensemble de traitements, et probablement plus particulièrement la compression, confèrent aux produits une structure organisée. Les produits séchés à 30°C présentent néanmoins des microstructures plus homogènes que les produits séchés à 25°C à humidité ambiante. Chez les produits obtenus à partir des céréales non panifiables on peut constater l'existence d'un réseau protéique continu.

Conclusion

Ces exemples montrent que l'on peut obtenir des produits de type pâte à partir de différents matériaux de base tels que des farines ou des semoules de céréales sans gluten, ou céréales non panifiables, (maïs, sorgho, riz) sans ajouter de produits issus du blé ou sans autres additifs. L'ajout d'additifs est cependant possible dans le but de changer le goût ou d'autres caractéristiques organoleptiques des produits.

D'autres matériaux de base ( farine de soja, gluten de maïs, farine de manioc contenant 10 % de farine de soja....) peuvent aussi être utilisés avec succès.

Ces nouveaux produits peuvent être, pour l'alimentation humaine, utilisés après cuisson d'une manière similaire aux pâtes traditionnelles.

Ce procédé peut aussi être utilisé pour texturer différents matériaux de base pour l'alimentation animale.

## TABLEAU 1
## ABSORPTION D'EAU ET PERTES A LA CUISSON

| Temps de cuisson (min) | 5 | | 10 | | 15 | | 20 | |
|---|---|---|---|---|---|---|---|---|
| | Gonfle-ment | * Perte à la cuisson | Gonfle-ment | * perte à la cuisson | Gonfle-ment | * perte à la cuisson | Gonfle-ment | * perte à la cuisson |
| Maïs | 202 | 7,5 | 231 | 10 | 256 | 12,5 | 282 | 14,7 |
| Sorgho | 211 | 8 | 233 | 11 | 261 | 13,6 | 274 | 17 |
| Riz | 154 | 12 | 164 | 13 | 181 | 15 | 206 | 20 |
| Blé dur | | | | | 224 | 12,8 | 240 | |
| Blé à pain | | | | | 230 | 14 | 250 | |

* exprimée en % de la matière sèche.

EP 0 782 397 B1

TABLEAU 2

Caractéristiques générales des produits

| Produits | Teneur en protéines. | Hydratation % | Gonflement % | Pertes Cuisson | Couleur des produits Crus | Cuits |
|---|---|---|---|---|---|---|
| Céréales | | | | | | |
| Maïs (M.) | 10,4 | 89 | 282 | 8,4 | jaune orangé | jaune |
| Sorgho | 13 | 89 | 274 | 9,2 | brun clair | gris rosâtre |
| Riz | 7,5 | 70-89 | 206 | 10,4 | blanc | blanc |
| Blé dur (cv. Néodur) | 14,7 | 49 | 240 | 5,1 | jaune | jaune |
| Blé tendre (cv. Thésée) | 10,3 | 53 | 250 | 6,7 | jaune brun | jaune brun |
| Teff | 12,0 | 66 | 175 | 10 | gris clair | brun foncé |
| Divers | | | | | | |
| Sarrasin | 11,3 | 50 | 225 | 4,5 | gris clair | brun foncé |
| Gluten de maïs | 60,0 | 100 | – | – | – | – |
| Soja | 40 | 65 | 224 | 9,7 | jaunâtre | jaune pâle |
| Pois chiche (P.C.) | 20 | 46 | 267 | 8,2 | jaune orangé | jaune pâle |
| Manioc | 0,9 | 105 | – | – | – | – |
| Patate douce (P.d.) | 2,0 | 62 | 295 | 10,6 | brun pâle | brun jaune |
| Igname | 1,9 | 82 | 300 | 7,8 | brun olive | brun jaune |
| Pomme de terre (P.d.t) | 2,1 | 60 | – | – | – | – |

EP 0 782 397 B1

TABLEAU 2 (suite)
Caractéristiques générales de produits

| Produits | Teneur en protéines | Hydratation % | Gonflement % | Pertes Cuisson | Couleur des produits Crus | Cuits |
|---|---|---|---|---|---|---|
| Mélanges Gluten M.75% + M.25% | 47,6 | 94 | 152 | 4,9 | jaune orangé | jaune |
| M.75% + gluten M.25% | 23,0 | 90 | 215 | 8,5 | jaune | jaune orangé |
| Manioc 90% + soja 10% | 4,9 | 85 | 251 | 11 | blanc | blanc très pâle |
| Manioc 80% + P.C.20% | 4,7 | 70 | 235 | n.d. | n.d. | n.d. |
| P.d. 90% + soja 10% | 5,8 | 63 | 252 | 9,4 | brun pâle | brun jaunâtre |
| Igname 90% + soja 10% | 5,7 | 76 | 276 | 7,1 | brun pâle | brun jaunâtre |
| Maïs 70% + soja 30% | 19 | 70 | 224 | 7,5 | jaune orangé | blanc très pâle |
| P.d. 50% + Manioc 50% | 1,5 | 65 | 250 | 12 | gris clair | jaune brun foncé |

EP 0 782 397 B1

EP 0 782 397 B1

TABLEAU 2 (suite)
Caractéristiques générales de produits obtenus par le procédé

| Produits | Teneur prot. | Hydratation % | Gonflement % | Pertes Cuisson | Couleur des produits Crus        Cuits |
|---|---|---|---|---|---|
| P.d.t. 50% + manioc 50% | 1,5 | 65 | 230 | 14 | jaune pâle     jaune brun foncé |
| P.d. 50% + P.d.t. 50% | 2 | 65 | 280 | 9,5 | brun olive     brun sombre |
| P.d.t. 90% + soja 10% | 5,8 | 65 | 248 | 15 | gris rosâtre brun jaunâtre |

## TABLEAU 3

### Propriétés viscoélastiques des produits

| Produits | Compressibilité | Recouvrance relative | Indice de viscoélasticité |
|---|---|---|---|
| Céréales | | | |
| Maïs (M) | 0,232 | 0,700 | 30 |
| Sorgho | 0,301 | 0,605 | 17,8 |
| Riz | 0,141 | 0,320 | 9,7 |
| Blé dur (cv.Néodur) | 0,340 | 0,607 | 17,8 |
| Blé tendre (cv.Thésée) | 0,347 | 0,617 | 18,0 |
| Teff | 0,315 | 0,341 | 10,9 |
| Divers | | | |
| Sarrasin | 0,476 | 0,172 | 3,7 |
| Gluten de Maîs (gluten M) | – | – | – |
| Soja | 0,295 | 0,551 | 18,7 |
| Pois chiche | 0,242 | 0,490 | 20,3 |
| Manioc | – | – | – |
| Patate douce (P.d.) | 0,693 | 0,478 | 6,9 |
| Igname | 0,600 | 0,299 | 5,1 |
| Pomme de terre (P.d.t) | – | – | – |

EP 0 782 397 B1

## TABLEAU 3 (suite)

### Propriétés viscoélastiques des produits

| Produits | Compressibilité | Recouvrance relative | Indice de viscoélasticité |
|---|---|---|---|
| **Mélanges** | | | |
| Gluten M.75%+Maïs 25% | 0,097 | 0,313 | 33,5 |
| Maïs 75% + Gluten M.25% | 0,142 | 0,475 | 33,6 |
| Manioc 90% + soja 10% | 0,592 | 0,081 | 1,4 |
| Manioc 80+ P.C. 20% | 0,573 | 0,088 | 1,5 |
| P.d. 90% + soja 10% | 0,458 | 0,631 | 13,9 |
| Igname 90% + soja 10% | 0,559 | 0,631 | 7,3 |
| Maïs 70% + soja 30% | 0,173 | 0,577 | 33,3 |
| P.d. 50% + manioc 50% | 0,541 | 0,149 | 2 |
| P.d.t. 50% + manioc 50% | 0,550 | 0,115 | 2,1 |
| P.d.t. 50% + P.d. 50% | 0,542 | 0,190 | 3,5 |
| P.d.t. 90% + soja 10% | 0,678 | 0,038 | 0,6 |

EP 0 782 397 B1

## TABLEAU 4

### Effet de la charge sur les mesures de la viscoélasticité des produits

| Produits | Charge: 750 g | | | Charge: 500 g | | |
|---|---|---|---|---|---|---|
| | C | Rr | Iv | C | Rr | Iv |
| Patate douce (P.d.) | 0,693 | 0,478 | 6,9 | 0,590 | 0,434 | 10 |
| Igname | 0,600 | 0,299 | 5,1 | 0,540 | 0,600 | 9,4 |
| P.d.t 90% + soja 10% | 0,678 | 0,038 | 0,6 | 0,193 | 0,518 | 27 |
| Manioc 90% + soja 10% | 0,592 | 0,081 | 1,4 | 0,337 | 0,439 | 13 |
| P.d.t. 50% + P.D. 50% | 0,542 | 0,190 | 3,5 | 0,352 | 0,607 | 17,5 |
| P.d. 50% + manioc 50% | 0,541 | 0,149 | 2 | 0,470 | 0,275 | 5,8 |
| P.d.t.50% + manioc 50% | 0,550 | 0,115 | 2,1 | 0,292 | 0,535 | 18,3 |

P.d.t. = Pomme de terre

C = compressibilité

Rr = Recouvrance relative

Iv = Indice de viscoélasticité.

EP 0 782 397 B1

**Revendications**

1. Produit alimentaire contenant au minimum 80% de farine de plantes à farine non panifiable ayant un taux d'hydratation d'au moins 55% du poids sec et présentant une cohésion.

2. Produit selon la revendication 1 caractérisé en ce qu'il est cuit.

3. Produit selon l'une des revendications 1 et 2, caractérisé en ce que les plantes à farine non panifiable sont les céréales non panifiables, telles que le sorgho, le maïs, le riz, ou des plantes autres que des céréales, telles que le soja ou le manioc.

4. Produit selon l'une des revendications 1 à 3, caractérisé en ce que sa capacité à absorber l'eau est supérieure à 150% et avantageusement supérieure à 200 %.

5. Produit selon l'une des revendications 1 à 4, caractérisé en ce qu'il présente une résistance proche de 100% à une surcuisson de 5 minutes après cuisson.

6. Procédé d'obtention d'un produit contenant au minimum 80% de farine selon l'une des revendications 1 à 5 comprenant les étapes suivantes:

   - hydratation de farine ou de semoule majoritairement d'une plante à farine non panifiable jusqu'à l'obtention d'un taux d'hydratation d'au moins 55%,
   - compression de la pâte, et
   - séchage.

7. Procédé selon la revendication 6, caractérisé en ce que l'hydratation est effectuée par pétrissage.

8. Procédé selon l'une des revendications 6 et 7, caractérisé en ce que la compression de la pâte est effectuée à une pression minimale de 60 kg/cm$^2$, et préférentiellement de 100 kg/cm$^2$.

9. Procédé selon l'une des revendications 6 à 8, caractérisé en ce que le séchage est effectué à une température inférieure à 45°C et préférentiellement proche d'environ 30°C.

10. Procédé selon l'une des revendications 6 à 9, caractérisé en ce que la farine, ou la semoule, hydratée est pétrie.

11. Procédé selon l'une des revendications 6 à 10, caractérisé en ce que la pâte est laminée avant compression.

12. Procédé selon l'une des revendications 6 à 11, caractérisé en ce que la compression est effectuée à l'aide d'une presse ou d'une extrudeuse.

13. Procédé selon l'une des revendications 6 à 12, caractérisé en ce que le taux d'hydratation minimale est préférentiellement de 60% du poids sec.

14. Procédé selon l'une des revendications 6 à 13, caractérisé en ce que la farine est celle de maïs ou de sorgho, auquel cas le taux d'hydratation est compris entre 85 et 95% du poids sec.

15. Procédé selon l'une des revendications 6 à 14, caractérisé en ce que la farine est celle de soja auquel cas le taux d'hydratation est compris entre 60 et 70 % du poids sec.

16. Procédé selon l'une des revendications 6 à 15, caractérisé en ce que la farine est celle de riz, auquel cas le taux d'hydratation est compris entre 65 et 95 % du poids sec.

17. Procédé selon l'une des revendications 6 à 16, caractérisé en ce que la farine est celle de gluten de maïs auquel cas le taux d'hydratation est compris entre 95 et 105% du poids sec.

18. Procédé selon l'une des revendications 6 à 17, caractérisé en ce que la farine est celle de manioc auquel cas le taux d'hydratation est compris entre 100 et 110% du poids sec.

**Patentansprüche**

1. Nahrungsmittel, enthaltend mindestens 80 % Mehl von Pflanzen, deren Mehl nicht zu Brot verarbeitbar ist und das eine Kohäsion aufweist, mit einem Hydratationsgrad von mindestens 55 % der Trockenmasse.

2. Produkt nach Anspruch 1, dadurch gekennzeichnet, dass es gekocht ist.

3. Produkt nach einem der Ansprüche 1 und 2, dadurch gekennzeichnet, dass es sich bei den Pflanzen, deren Mehl nicht zu Brot verarbeitbar ist, um nicht zu Brot verarbeitbare Getreide wie Sorgho, Mais, Reis oder von Getreide verschiedene Pflanzen wie Soja oder Maniok handelt.

4. Produkt nach einem der Ansprüche 1 bis 3, dadurch gekennzeichnet, dass sein Wasserabsorptionsvermögen mehr als 150 % und vorzugsweise mehr als 200 % beträgt.

5. Produkt nach einem der Ansprüche 1 bis 4, dadurch gekennzeichnet, dass es einem 5-minütigen Zerkochen nach dem Garwerden einen Widerstand von fast 100 % entgegensetzt.

6. Verfahren zur Herstellung eines mindestens 80 % Mehl enthaltenden Produkts nach einem der Ansprüche 1 bis 5, umfassend die folgenden Stufen:

   - Hydratation eines Mehls oder Grießes hauptsächlich einer Pflanze, deren Mehl nicht zu Brot verarbeitbar ist, bis zum Erhalt eines Hydratationsgrades von mindestens 55 %,

   - Komprimieren des Teigs und das

   - Trocknen.

7. Verfahren nach Anspruch 6, dadurch gekennzeichnet, dass die Hydratation durch Kneten bewirkt wird.

8. Verfahren nach einem der Ansprüche 6 und 7, dadurch gekennzeichnet, dass das Komprimieren des Teigs bei einem Mindestdruck von 60 kg/cm$^2$ und vorzugsweise von 100 kg/cm$^2$ bewerkstelligt wird.

9. Verfahren nach einem der Ansprüche 6 bis 8, dadurch gekennzeichnet, dass das Trocknen bei einer Temperatur von weniger als 45 °C und vorzugsweise bei etwa 30 °C bewerkstelligt wird.

10. Verfahren nach einem der Ansprüche 6 bis 9, dadurch gekennzeichnet, dass das hydratisierte Mehl oder der hydratisierte Grieß geknetet wird.

11. Verfahren nach einem der Ansprüche 6 bis 10, dadurch gekennzeichnet, dass der Teig vor dem Komprimieren gewalzt wird.

12. Verfahren nach einem der Ansprüche 6 bis 11, dadurch gekennzeichnet, dass das Komprimieren mittels einer Presse oder eines Extruders bewerkstelligt wird.

13. Verfahren nach einem der Ansprüche 6 bis 12, dadurch gekennzeichnet, dass der Mindest-Hydratationsgrad 55 % und vorzugsweise 60 % der Trockenmasse beträgt.

14. Verfahren nach einem der Ansprüche 6 bis 13, dadurch gekennzeichnet, dass es sich beim Mehl um Mais- oder Sorgho-Mehl handelt, wobei der Hydratationsgrad zwischen 85 und 95 % der Trockenmasse beträgt.

15. Verfahren nach einem der Ansprüche 6 bis 14, dadurch gekennzeichnet, dass es sich beim Mehl um Sojamehl handelt, wobei der Hydratationsgrad zwischen 60 und 70 % der Trockenmasse beträgt.

16. Verfahren nach einem der Ansprüche 6 bis 15, dadurch gekennzeichnet, dass es sich beim Mehl um Reismehl handelt, wobei der Hydratationsgrad zwischen 65 und 95 % der Trockenmasse beträgt.

17. Verfahren nach einem der Ansprüche 6 bis 16, dadurch gekennzeichnet, dass es sich beim Mehl um Maisglutenmehl handelt, wobei der Hydratationsgrad zwischen 95 und 105 % der Trockenmasse beträgt.

18. Verfahren nach einem der Ansprüche 6 bis 17, dadurch gekennzeichnet, dass es sich beim Mehl um Maniokmehl handelt, wobei der Hydratationsgrad zwischen 100 und 110 % der Trockenmasse beträgt.

**Claims**

1. Food product comprising a minimum of 80% of flour from non-bread flour plants having a degree of hydration of at least 55% of the dry weight and showing cohesiveness.

2. Product according to claim 1, characterized in that it is cooked.

3. Product according to one of claims 1 and 2, characterized in that the non-bread flour plants are non-bread cereals, such as sorghum, corn, rice, or plants other than cereals, such as soya or cassava.

4. Product according to one of claims 1 to 3, characterized in that its capacity to absorb water is greater than 150% and advantageously greater than 200%.

5. Product according to one of claims 1 to 4, characterized in that it has a resistance near to 100% to a 5 minutes overcooking after it is cooked.

6. Method for obtaining a product containing at least 80% of flour according to one of claims 1 to 5 comprising the following steps:

   - hydration of flour or semolina predominantly from a non-bread flour plant until a degree of hydration of at least 55% is obtained,
   - compression of the paste, and
   - drying.

7. Method according to claim 6, characterized in that the hydration is performed by kneading.

8. Method according to one of claims 6 and 7, characterized in that the compression of the paste is performed at a minimum pressure of 60 kg/cm$^2$, and preferably of 100 kg/cm$^2$.

9. Method according to one of claims 6 to 8, characterized in that the drying is performed at a temperature lower than 45°C and preferably near to about 30°C.

10. Method according to one of claims 6 to 9, characterized in that the hydrated flour or semolina, is kneaded.

11. Method according to one of claims 6 to 10, characterized in that the paste is rolled before compression.

12. Method according to one of claims 6 to 11, characterized in that the compression is performed with a press or an extruder.

13. Method according to one of claims 6 to 12, characterized in that the minimum degree of hydration is 55% and preferably 60% of the dry weight.

14. Method according to one of claims 6 to 13, characterized in that the flour is that of corn or sorghum, in which case the degree of hydration is between 85% and 95% of the dry weight.

15. Method according to one of claims 6 to 14, characterized in that the flour is that of soya, in which case the degree of hydration is between 60% and 70% of the dry weight.

16. Method according to one of claims 6 to 15, characterized in that the flour is that of rice, in which case the degree of hydration is between 65% and 95% of the dry weight.

17. Method according to one of claims 6 to 16, characterized in that the flour is that of corn gluten, in which case the degree of hydration is between 95% and 105% of the dry weight.

18. Method according to one of claims 6 to 17, characterized in that the flour is that of cassava, in which case the degree of hydration is between 100% and 110% of the dry weight.

**FIGURE 1**

FIG. 2

FIG. 3

FIG. 4

FIG. 5A

FIG. 5B

FIG. 5C

FIG. 5D

FIG. 5E

FIG. 7

FIG. 6

FIG. 8

FIG. 9A

FIG. 9B

FIG. 10A

FIG. 10B

FIG. 11A

FIG. 11B

FIG. 12A

FIG. 12B